# EUROPÄISCHE PATENTANMELDUNG

(11) **EP 1 008 767 A1**
(43) Veröffentlichungstag der Anmeldung: **14.06.2000**
(21) Anmeldenummer: 99123537.5
(22) Anmeldetag: 26.11.1999
(51) Int. Cl.: F16B 12/20

(54) **Verbindungsvorrichtung für Platten von Möbeln**

(30) Priorität: 09.12.1998 ES 9802564
(71) Anmelder: Rioja Calvo, Miguel Angel, 20800 Zarautz (Guipuzcoa) (ES)
(72) Erfinder: Rioja Calvo, Miguel Angel, 20800 Zarautz (Guipuzcoa) (ES)
(74) Vertreter: Feldkamp, Rainer, Dipl.-Ing.

(57) **Zusammenfassung**

Eine Verbindungsvorrichtung für Platten von Möbeln weist einen aufspreizbaren Dübel 4 auf, der in Axialrichtung in zwei Hälften unterteilt ist, die an den freien Enden von jeweiligen Schenkeln eines gabelförmigen Endes 7 angeordnet sind, wobei die Schenkel am anderen Ende entlang des Randes einer Bohrung 9 miteinander verbunden sind. Einer Spannvorrichtung 5 weist eine radialen Führung 8 zur Aufnahme des gabelförmigen Endes 7 und jeweilige radiale Keile 13 auf, die zwischen die beiden Hälften des aufspreizbaren Dübels eindringen, wenn dieser durch eine Drehung einer querverlaufenden, in der Spannvorrichtung 5 drehbar gelagerten Betätigungsspindel 11 gespannt wird, die einen exzentrischen zylindrischen Abschnitt 10 aufweist, der in die Bohrung 9 eingesetzt ist.

## Beschreibung

### GEBIET DER ERFINDUNG

Die Erfindung bezieht sich auf eine Verbindungsvorrichtung für Platten der im Oberbegriff des Anspruchs 1 genannten Art.

Die Vorrichtung, die den Gegenstand der vorliegenden Erfindung bildet, ist eine Vorrichtung, die zur einfachen Verbindung von zwei Platten in zueinander senkrechten Ebenen verwendet wird, wobei diese Verbindung zwischen einer Fläche der einen Platte und einer Kante der anderen Platte erfolgt.

### STAND DER TECHNIK

Auf dem Gebiet dieser Erfindung sind vielfältige Lösungen bekannt, die einem funktionellen Grundgedanken entsprechen, bei dem in einer Seitenfläche der ersten der genannten Platten eine Stange verankert wird, die zum Eingriff im Inneren einer Spannvorrichtung bestimmt ist, die in der zweiten der Platten in einem Aufnahmesitz eingesetzt ist, der in einer Seitenfläche dieser Platte ausgebildet ist und eine seitliche Verbindungsöffnung mit der Verbindungskante zur anderen Platte aufweist.

Das Festspannen der Stange erfolgt durch eine Drehung eines Knebels, der in der Spannvorrichtung angeordnet ist und der bei seiner Spanndrehung eine fortschreitend größere Zugkraft ausübt. In einigen Fällen weist der drehbare Knebel eine lange Nut auf, die von ihrer Spitze aus offen ist und in die ein verengter Hals eingreift, der an der Stange ausgebildet ist. Bei beiden Ausführungsformen ergibt sich die ansteigende Zugkraft aus einem Nockenprofil, das in dem drehbaren Knebel ausgebildet ist.

In jedem Fall ist es bei dieser Art der Verbindungsvorrichtungen allgemein üblich, daß eine Spannvorrichtung vorgesehen ist, die in einen Aufnahmesitz benachbart zu und in Verbindung mit der Kante dieser Platte eingesetzt ist, über die die Verbindung mit der Fläche der anderen Platte erfolgt. Weiterhin ist es allgemein bekannt, daß der Eingriff durch die Drehung irgendeines Elementes erfolgt, das in der Spannvorrichtung angeordnet ist. Die Besonderheiten der einen oder der anderen dieser bekannten Vorrichtungen bestehen in den speziellen Konfigurationen der Stange und/oder des drehbaren Knebels und/oder in den Montagevorkehrungen.

Ein wesentlicher Nachteil dieser bekannten Vorrichtungen besteht darin, daß die in der ersten Platte verankerte Stange die Lagerung und den Transport der Teile erschwert, weil eine direkte Anlage an anderen Platten verhindert wird. Weiterhin ergibt die Stange klar erkennbar die Gefahr von Schäden an anderen Teilen und von Personen, wobei weiterhin ein Schlag gegen andere Elemente die eigentliche Verankerung der Stange beeinträchtigen kann und dazu führen kann, daß sich diese beim Ausüben der Zugkraft bei der Verbindung mit der anderen Platte löst.

Der Erfindung liegt die Aufgabe zugrunde, eine Verbindungsvorrichtung der eingangs genannten Art zu schaffen, die einen einfachen Aufbau aufweist und selbst im vormontierten Zustand keine aus einer Haupt- bzw. Seitenfläche der Platten vorspringenden Teile aufweist, wobei auch die Vorbearbeitung der Platten einfach ist..

Diese Aufgabe wird durch die im Anspruch 1 angegebenen Merkmale gelöst.

Vorteilhafte Ausgestaltungen und Weiterbildungen der Erfindung ergeben sich aus den Unteransprüchen.

Die erfindungsgemäße Vorrichtung beruht auf einem neuen Konzept der Bestandteile und Funktionsweise, wobei sich die Besonderheit ergibt, daß in der Haupt- bzw. Seitenfläche der ersten Platte eine Blindbohrung vorgesehen ist, in die ein aufspreizbarer Dübel eingesetzt wird, während sich dieser im nicht aufgespreizten Zustand befindet. Der Dübel ist mit axialer Verschiebbarkeit in einer Spannvorrichtung montiert, die in einen in der zweiten Platte ausgebildeten Aufnahmesitz eingesetzt ist, der seitlich mit der durch die Stirnfläche gebildeten Verbindungskante der zweiten Platte über eine seitliche Öffnung in Verbindung steht, aus der dieser aufspreizbare Dübel vorspringt. Der Dübel ist in Axialrichtung in zwei Hälften unterteilt, die miteinander über jeweilige Schenkel eines gabelförmigen Endes verbunden sind, das in Längsrichtung in eine radiale Führung der Spannvorrichtung eingesetzt ist. Dieses Ende ist mit einer Bohrung versehen, in der ein exzentrischer zylindrischer Abschnitt einsetzbar ist, der von einer Betätigungsspindel ausgeht, die sich in Axialrichtung bezüglich der Spannvorrichtung erstreckt und in dieser drehbar gelagert ist. Die Betätigungsspindel weist an ihren Endstirnflächen jeweilige Betätigungskerben für die Spitze eines Schraubendrehers auf, wobei diese Schlitze von den Seitenflächen der Spannvorrichtung aus zugänglich sind, die bezüglich der Mündung bzw. des Bodens des Aufnahmesitzes angeordnet sind. Die Spannvorrichtung weist seitlich jeweilige radiale Keile auf, die durch die seitliche Öffnung in der Verbindungskante der zweiten Platte aus vorspringen und sich in der axialen Ebene befinden, die den aufspreizbaren Dübel unterteilt, wobei ein Keil für jede Seite des gabelförmigen Endes vorgesehen ist. Diese radialen Keile weisen eine in zweckmäßiger Weise größere Breite auf, als der Abstand zwischen den beiden Hälften des aufspreizbaren Dübels in dessen nicht aufgespreizten Zustand, und die radialen Keile können in diesem nicht aufgespreizten Zustand in jeweilige komplementäre und reziproke Nuten eintreten, die in den Hälften des aufspreizbaren Dübels ausgebildet sind.

Diese erfindungsgemäße Vorrichtung erfordert keine vormontierte Stange in der ersten Platte, und es reicht eine einfache Blindbohrung in dieser Platte. Entsprechend besteht das Problem der Störung und der Beschädigungsgefahr aufgrund dieser Stange nicht. Die erste Platte ermöglicht eine vollflächige Anlage an weiteren Platten, wodurch die Verpackung und die Lagerung erleichtert wird, ohne daß sich eine Beschädigungsgefahr ergibt. Außerdem führt die Anordnung einer einfachen Blindbohrung zu einer schnelleren, einfacheren und wirtschaftlicheren Montage, als die bekannte Stange.

Andererseits ist die Arbeitsweise mit der erfindungsgemäßen Vorrichtung enorm einfach, schnell und führt zu einer hohen Zuverlässigkeit. Es reicht aus, den geteilten aufspreizbaren Dübel in die Blindbohrung (der ersten Platte) einzusetzen, worauf bei einer Drehung der Betätigungsspindel die Wirkung des exzentrischen zylindrischen Abschnittes auf das gabelförmige Ende bewirkt, daß dieses entlang der radialen Führung eintritt, und sobald diese Bewegung beginnt, rufen die Keile die Aufspreizung des aufspreizbaren Dübels hervor, wodurch dieser immer mehr in der Blindbohrung festgelegt wird, wodurch sich die gewünschte Befestigung zwischen den ersten und zweiten Platten ergibt.

Die radialen Keile der Spannvorrichtung weisen an ihrer Spitze einen geneigten Abschnitt auf, der in einen dahinter liegenden geradlinigen Teil übergeht, der einen Kern mit im wesentlichen parallelen Seitenwänden ergibt. Die zur Befestigung dienende Aufspreizung des Dübels, die durch den geneigten Abschnitt der radialen Keile hervorgerufen wird, wird während des Gleitens entlang des geradlinigen Abschnittes aufrechterhalten, mit einer entsprechenden Zugwirkung, die die Platten aneinander annähert und befestigt.

Gemäß einer weiteren Besonderheit der Erfindung weisen die beiden Hälften des aufspreizbaren Dübels am Umfang eine Vielzahl von halbringförmigen Zähnen auf.

### ZEICHNUNGEN UND BEZUGSZIFFERN

Zum besseren Verständnis der Eigenart der vorliegenden Erfindung ist in den beigefügten Zeichnungen eine bevorzugte gewerbliche Ausführungsform dargestellt, die lediglich erläuternd und nicht beschränkend ist.
Figur 1 ist eine auseinandergezogene Darstellung der erfindungsgemäßen Vorrichtung, in der jeweilige erste (1) und zweite (2) Platten eingefügt sind, die in der Relativstellung für die Montage mit dem aufspreizbaren Dübel 4 und der Spannvorrichtung 5 angeordnet sind.
Figur 2 zeigt die Vorrichtung nach Figur 1 in montiertem Zustand im Normalgebrauch.
Figur 3 ist eine Draufsicht von oben auf die Vorrichtung nach Figur 2 bei Einbau in die Verbindung von einer ersten (geschnittenen) Platte 1 und einer zweiten Platte 2 in einem Zustand, bei dem der aufspreizbare Dübel 4 nicht aufgespreizt ist.
Figur 4 zeigt den Schnitt IV-IV nach Figur 3.
Figur 5 ist eine Draufsicht von oben des aufspreizbaren Dübels und des gabelförmigen Endes (4-7) nach Figur 1.
Figur 6 ist der Schnitt VI-VI, der in Figur 5 gezeigt ist.
Figur 7 zeigt die Vorrichtung nach Figur 3 getrennt und im aufgespreizten Zustand des aufspreizbaren Dübels 4.

In diesen Figuren sind die folgenden Bezugsziffern angegeben:
1. Erste Platte
2. Zweite Platte
3. Blindbohrung
4. Aufspreizbarer Dübel
5. Spannvorrichtung
6. Aufnahmesitz
6a. Seitliche Öffnung des Aufnahmesitzes 6
7. Gabelförmiges Ende des Dübels 4
8. Radiale Führung der Spannvorrichtung 5
9. Bohrung in dem Ende 7
10. Exzentrischer zylindrischer Abschnitt der Betätigungsspindel 11
11. Betätigungsspindel der Spannvorrichtung 5
12. Schraubendreher
13. Radiale Keile der Spannvorrichtung 5
13a. Geneigter Abschnitt des Keils 13
13b. Geradliniger Abschnitt des Keils 13
14. Nuten des aufspreizbaren Dübels 4
15. Halbringförmige Zähne des aufspreizbaren Dübels 4.

### ERLÄUTERUNG EINER BEVORZUGTEN AUSFÜHRUNGSFORM

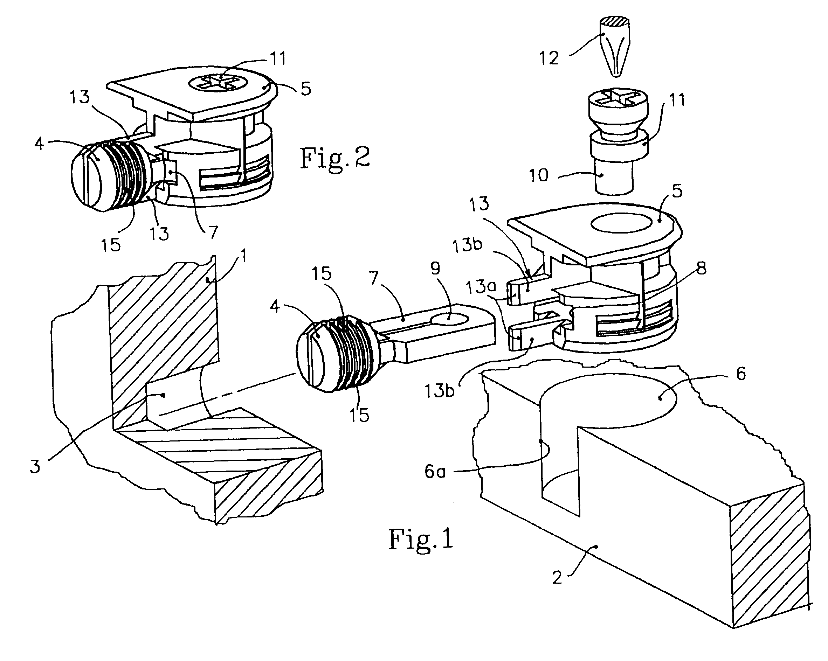

Bezüglich der bereits erwähnten Zeichnungen und Bezugsziffern ist in den beigefügten Zeichnungen eine bevorzugte Ausführungsform (Figur 2) der Erfindung gezeigt, die sich auf eine Verbindungsvorrichtung für Platten von Möbeln von der Art bezieht, die zur zweckmäßigen Verbindung von zwei Platten, nämlich einer ersten Platte 1 und einer zweiten Platte 2, senkrecht zueinander bestimmt sind, wobei diese Verbindung zwischen einer Seitenfläche beispielsweise der ersten Platte 1 und der Kante beispielsweise der zweiten Platte 2 erfolgt, in die eine Spannvorrichtung zur Verbindung der Platten 1, 2 eingebaut ist, die durch eine Seitenfläche der zweiten Platte 2 hindurch in einem Aufnahmesitz 6 eingesetzt ist, der seitlich mit einer benachbarten Kante in Verbindung steht, über die die Verbindung mit der ersten Platte 1 erfolgt.

Wie dies insbesondere aus Figur 1 zu erkennen ist, erstreckt sich dieser Aufnahmesitz 6 durch eine Seitenfläche der Platte 2 senkrecht in diese Platte hinein, wobei der Aufnahmesitz in einem derartigen Abstand von der Verbindungskante gebohrt oder auf andere Weise hergestellt wird, daß sich gleichzeitig die seitliche Öffnung 6a in der Verbindungskante ergibt.

Gemäß dem Grundgedanken der Erfindung ist in der Seitenfläche (Figur 1) der ersten Platte 1 lediglich eine Blindbohrung 3 vorgesehen, in die ein aufspreizbarer Dübel 4 in seinem nicht aufgespreizten Zustand einsetzbar ist. Dieser Dübel wird mit axialer Verschiebbarkeit in einer Spannvorrichtung 5 montiert, die in den Aufnahmesitz 6 eingesetzt ist, der seitlich mit der Verbindungskante der zweiten Platte 2 über die seitliche Öffnung 6a in Verbindung steht, durch die hindurch der aufspreizbare Dübel 4 vorspringt.

Der aufspreizbare Dübel 4 ist in Axialrichtung in zwei Hälften unterteilt, die miteinander über jeweilige Schenkel eines gabelförmigen Endes 7 verbunden sind, das in Längsrichtung in einer radialen Führung 8 der Spannvorrichtung 5 angeordnet wird. Die beiden Hälften des Dübels 4 sind an den freien Enden der Schenkel des gabelförmigen Endes 7 befestigt oder mit diesen einstückig ausgebildet.

Der dem Dübel 4 gegenüberliegende Verbindungsbereich des gabelförmigen Endes 7 ist mit einer Bohrung 9 versehen, in die ein exzentrischer zylindrischer Abschnitt 10 eingesetzt ist, der von einer Betätigungsspindel 11 ausgeht, die sich in Axialrichtung gegenüber der Spannvorrichtung 5 erstreckt und in dieser drehbar gelagert ist. Die Betätigungsspindel weist in ihren am Ende liegenden Stirnflächen jeweilige Betätigungsschlitze für die Spitze eines Schraubendrehers 12 auf, die über die Flächen der Spannvorrichtung 5 zugänglich sind, die benachbart zur Mündung bzw. zum Boden des Aufnahmesitzes 6 angeordnet sind.

Die Spannvorrichtung 5 weist seitlich jeweilige radiale Keile 13 auf, die durch die seitliche Öffnung 6a in der Kante der zweiten Platte 2 aus dieser heraus vorspringen und sich in der axialen Ebene befinden, die den aufspreizbaren Dübel 4 teilt, wobei sich jeweils ein Keil auf jeder Seite des gabelförmigen Endes 7 (über bzw. unter diesem Ende) befindet. Die radialen Keile 13 weisen eine Breite auf, die in zweckmäßiger Weise größer als der Abstand ist, der im nicht aufgespreizten Zustand zwischen den Hälften des aufspreizbaren Dübels 4 besteht. Diese radialen Keile 13 können im nicht aufgespreizten Zustand zwischen jeweiligen komplementären und reziproken Nuten 14 angeordnet werden, die in den beiden Hälften des aufspreizbaren Dübels 4 ausgebildet sind.

Die radialen Keile 13 der Spannvorrichtung 5 weisen an ihrer Spitze einen geneigten Abschnitt 13a auf, der sich in einem geradlinigen hinteren Teil 13b fortsetzt, der einen Kern mit im wesentlichen parallelen Seitenwänden bildet. Das Aufspreizen zur Festklemmung des Dübels 4, das durch den geneigten Abschnitt 13a der radialen Keile 13 hervorgerufen wird, wird während des Gleitens entlang des geradlinigen Abschnittes 13b aufrechterhalten, mit einer entsprechenden Zugwirkung, die die Platten 1 und 2 aneinander annähert und aneinander festhält.

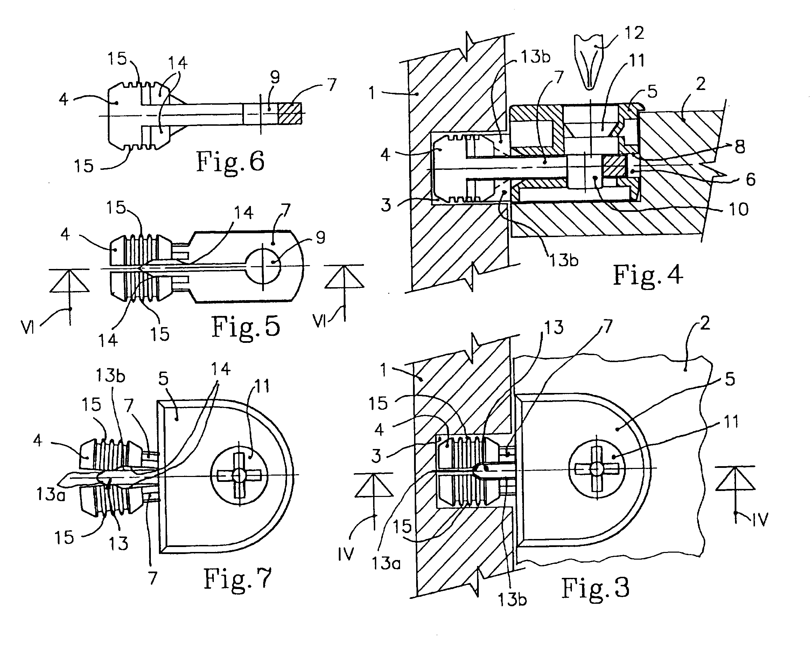

Die betriebsmäßige Anwendung der neuartigen Vorrichtung ist in den Figuren 3 und 4 gezeigt, während die Funktionsweise in Figur 7 gezeigt ist. Der aufspreizbare Dübel 4 wird (in seinem nicht aufgespreizten Zustand) in die Blindbohrung 3 der ersten Platte 1 eingesetzt (Figuren 3 und 4) nachdem die Vorrichtung in den Aufnahmesitz 6 der zweiten Platte 2 eingebaut wurde. Es sei bemerkt (Figur 3), daß die radialen Keile 3 vollständig in das Innere der Nuten 14 eingesetzt werden können, die zwischen den Hälften des geteilten aufspreizbaren Dübels 4 gebildet sind, so daß bei einer Drehung der Betätigungsspindel 11 der exzentrische zylindrische Abschnitt 10 dieser Betätigungsspindel das gabelförmige Ende in die Spannvorrichtung hineinzieht und dabei die aus dem gabelförmigen Ende 7 und dem aufspreizbaren Dübel 4 bestehende Einheit spannt, wodurch die Keile 13 zwischen die beiden Hälften des Dübels eingepreßt werden und sich dieser (Figur 7) gegen die Wand der Blindbohrung 3 öffnet, so daß eine feste und zuverlässige Befestigung zwischen den Platten 1 und 2 ausgebildet wird.

Das Geheimnis der einfachen und wirkungsvollen Verbindungsvorrichtung beruht auf der speziellen Konfiguration der Einheit, die (Figuren 5 und 6) durch den aufspreizbaren Dübel 4 und das gabelförmige Ende 7 gebildet ist.

Hieraus ergibt sich, daß die mechanischen Einrichtungen zur Verbindung zwischen den Platten 1, 2 und zur Herstellung dieser Verbindung in der zweiten Platte 2 angeordnet sind, während es entsprechend in der ersten Platte 1 ausreicht, eine Blindbohrung 3 anzuordnen, mit den Vorteilen die bereits eingangs erwähnt wurden.

Um den Befestigungszustand zu verbessern, weisen die beiden Hälften des aufspreizbaren Dübels 4 an ihrem Umfang eine Vielzahl von halbringförmigen Zähnen 15 auf.

## Patentansprüche

1. Verbindungsvorrichtung für Platten von Möbeln zur Verbindung von zwei Platten senkrecht zueinander, derart, daß die Verbindung zwischen einer Seitenfläche einer ersten Platte (1) und der Kante einer zweiten Platte (2) erfolgt, in die eine Spannvorrichtung für die Verbindung der Platten (1, 2) eingebaut ist, die durch eine Seitenfläche der zweiten Platte (2) hindurch in einem Aufnahmesitz (6) eingesetzt ist, der seitlich mit der benachbarten Kante in Verbindung steht, durch die hindurch die Verbindung mit der ersten Platte (1) erfolgt,
dadurch gekennzeichnet, daß in der ersten Platte (1) eine Blindbohrung (3) ausgebildet ist, in die bei der Herstellung der Verbindung ein aufspreizbarer Dübel (4) einsetzbar ist, wenn sich dieser im nicht aufgespreizten Zustand befindet, daß der Dübel mit axialer Verschiebbarkeit in einer Spannvorrichtung (5) montiert ist, die in den Aufnahmesitz (6) eingesetzt ist, der seitlich mit der Kante der zweiten Platte (2) über eine seitliche Öffnung (6a) in Verbindung steht, durch die hindurch der genannte aufspreizbare Dübel (4) vorspringt, daß der Dübel (4) in Axialrichtung in zwei Hälften unterteilt ist, die miteinander über jeweilige Schenkel eines gabelförmigen Endes (7) verbunden sind, das in Längsrichtung in einer radialen Führung (8) der Spannvorrichtung (5) anzuordnen ist und mit einer Bohrung (9) versehen ist, in die ein exzentrischer zylindrischer Abschnitt (10) eingesetzt ist, der von einer Betätigungsspindel (11) ausgeht, die sich in Axialrichtung gegenüber der Spannvorrichtung (5) erstreckt, in dieser drehbar gelagert ist und an ihren Endstirnflächen jeweilige Betätigungsschlitze für die Spitze eines Schraubendrehers (12) aufweist, wobei die Schlitze durch die Seitenflächen der Spannvorrichtung (5) hindurch zugänglich sind, die bezüglich der Mündung und des Bodens des Aufnahmesitzes (6) angeordnet sind, daß die Spannvorrichtung (5) seitlich jeweilige radiale Keile (13) aufweist, die sich durch die seitliche Öffnung (6a) in der Kante der zweiten Platte (2) aus dieser heraus erstrecken und in der axialen Ebene angeordnet sind, die den aufspreizbaren Dübel (4) teilt, wobei jeweils ein Keil auf jeder Seite des gabelförmigen Endes (7) angeordnet ist, und daß die radialen Keile (13) eine Breite aufweisen, die in geeigneter Weise größer als der Abstand ist, der im nicht aufgespreizten Zustand zwischen den beiden Hälften des aufspreizbaren Dübels (4) besteht, wobei die radialen Keile (13) im Zustand ohne Aufspreizung zwischen jeweiligen komplementären und reziproken Nuten (14) angeordnet werden können, die in den beiden Hälften des aufspreizbaren Dübels (4) ausgebildet sind, wobei bei einer Drehung der Betätigungsspindel (11) das Ende (7) in die Spannvorrichtung (5) hineingezogen wird und die Keile (13) zwischen die Hälften des Dübels (4) eindringen und diese auseinanderspreizen.

2. Verbindungsvorrichtung gemäß Anspruch 1, dadurch gekennzeichnet, daß die beiden Hälften des aufspreizbaren Dübels (4) am Umfang eine Vielzahl von halbringförmigen Verzahnungen (15) aufweisen.

3. Verbindungsvorrichtung nach den vorhergehenden Ansprüchen, dadurch gekennzeichnet, daß die radialen Keile (13) der Spannvorrichtung (5) an ihrer Spitze einen geneigten Abschnitt (13a) aufweisen, der sich in einen hinteren geradlinigen Abschnitt (13b) verlängert, der einen Kern mit im wesentlichen parallelen Seitenwänden bildet.
